# FASCICULE DE BREVET EUROPEEN

(11) **EP 1 676 626 B1**
(45) Date de publication et mention de la délivrance du brevet: **14.03.2012**
(21) Numéro de dépôt: 06290009.7
(22) Date de dépôt: 04.01.2006
(51) Int. Cl.: B01D 53/86, B01D 53/96, B01D 53/56

(54) **Reacteur catalytique de denoxification**
Denox katalytischer Reaktor
DeNox catalytic reactor

(30) Priorité: 04.01.2005 FR 0550022
(43) Date de publication de la demande: 05.07.2006
(73) Titulaire: Vinci Environnement, 92500 Rueil Malmaison (FR)
(72) Inventeur: Morice, Ludovic, 60190 Bailleul Le Soc (FR)
(74) Mandataire: Novagraaf Technologies

(56) Documents cités:
- EP-A- 0 957 243
- DE-A1- 10 062 957
- DE-C1- 19 751 663
- FR-A- 2 855 767
- US-B1- 6 340 002

## Description

L'invention concerne un réacteur catalytique pour la dénoxification de gaz, une installation de traitement des gaz comprenant un tel réacteur, ainsi qu'un procédé de régénération d'un module d'un tel réacteur. DE-A-10 062 957 décrit un réacteur similaire.

On entend par « dénoxification » d'un gaz la réduction par voie catalytique des oxydes d'azotes contenus dans ledit gaz. Les oxydes d'azotes, désignés de façon générale par la formule NOx, comprennent notamment les composés suivants : NO, NO₂, N₂O.

Les réacteurs catalytiques permettent la dénoxification de gaz issus notamment de l'incinération des ordures ménagères, de sorte que la teneur en oxydes d'azote des gaz finalement rejetés à l'atmosphère soit inférieure au seuil réglementaire imposé.

On connaît déjà de tels réacteurs, dans lesquels les gaz à traiter introduits en entrée transitent par un catalyseur approprié afin de subir la dénoxification souhaitée, avant d'être rejetés à l'atmosphère. Généralement le procédé de dénoxification par voie catalytique est une étape supplémentaire dans le traitement des gaz. La dénoxification est réalisée après l'étape de dépoussiérage et de déchloration/désulfuration. Au contact des gaz contenant les oxydes d'azote, le catalyseur se charge progressivement en différents sels issus des réactions de combinaison entre NH₃ et HCl/SO₂ résiduels et perd de ce fait une partie de son activité.

Afin de continuer à obtenir les performances souhaitées, c'est-à-dire des teneurs en NOx inférieures au seuil réglementaire, il est alors nécessaire que le catalyseur retrouve une activité acceptable. A cet effet, il est exclu de remplacer systématiquement le catalyseur, car cela s'avérerait trop coûteux.

Les procédés couramment employés consistent donc à régénérer le catalyseur, en le faisant traverser par un gaz chauffé à un température suffisamment importante pour provoquer la sublimation des sels et leur évacuation sous forme gazeuse (NH₃, SO₂, HCl).

Toutefois, selon certaines réalisations connues, une telle régénération implique l'arrêt du fonctionnement du réacteur catalytique en mode normal de traitement. En conséquence, pendant la phase de régénération, il n'est plus possible de traiter les gaz avant leur rejet à la cheminée. Compte tenu des contraintes imposées sur les rejets, il est souvent nécessaire d'arrêter également les installations situées en amont du réacteur, telles que les usines d'incinération. Or, un tel arrêt n'est pas compatible avec les contraintes de fonctionnement (volume d'ordures traitées par heure par exemple).

Selon d'autres réalisations connues, le réacteur est divisé en modules distincts dont certains peuvent être en phase de régénération tandis que, simultanément, les autres sont en mode de fonctionnement normal et permettent la dénoxification des gaz à traiter. Mais les gaz issus de la régénération sont évacués avec les gaz traités. Or, les gaz issus de la régénération contiennent sous forme de gaz les polluants issus des sels ôtés du catalyseur. Ainsi, les teneurs maximales réglementaires en polluants des gaz rejetés à l'atmosphère ne sont plus respectées (HCl, SO₂, NH₃).

En outre, de tels réacteurs sont généralement de conception relativement lourde, et nécessitent, notamment, de nombreux organes de commande (vérins, etc.).

L'invention vise à fournir un réacteur catalytique de conception simple compacte et permettant de respecter les normes concernant les rejets polluants sans diminution des capacités de traitement des gaz et sans réduction de capacité de traitement incompatible avec les objectif d'exploitation.

A cet effet, et selon un premier aspect, l'invention concerne un réacteur catalytique pour la dénoxification de gaz, comprenant :
- un premier compartiment d'entrée dans lequel les gaz à traiter sont destinés à être introduits ;
- un premier compartiment de sortie depuis lequel les gaz traités sont destinés à être évacués ;
- au moins deux modules, chaque module contenant un catalyseur apte à permettre la dénoxification des gaz à traiter et présentant un premier orifice d'entrée communiquant avec le premier compartiment d'entrée du réacteur et un premier orifice de sortie communiquant avec le premier compartiment de sortie du réacteur ;
- un deuxième compartiment d'entrée dans lequel des gaz de régénération du catalyseur sont destinés à être introduits, chaque module présentant un deuxième orifice d'entrée communiquant avec ledit deuxième compartiment d'entrée du réacteur ;
- pour chaque module, des moyens d'obturation d'entrée mobiles aptes à obturer sélectivement le premier ou le deuxième orifice d'entrée dudit module.

Selon une définition générale de l'invention, le réacteur comprend en outre :
- un deuxième compartiment de sortie depuis lequel les gaz issus de la régénération du catalyseur sont destinés à être évacués, chaque module présentant un deuxième orifice de sortie communiquant avec ledit deuxième compartiment de sortie du réacteur ;
- pour chaque module, des moyens d'obturation de sortie mobiles aptes à obturer sélectivement le premier ou le deuxième orifice de sortie dudit module, lesdits moyens d'obturation d'entrée et de sortie étant agencés pour que chaque module puisse, en fonction des besoins, être traversé soit par les gaz à traiter soit par les gaz de régénération, indépendamment du ou des autres modules.

De la sorte, les gaz issus de la régénération ne sont pas mélangés aux gaz traités mais isolés, et peuvent être traités avant leur rejet à l'atmosphère.

Selon d'autres caractéristiques, les moyens d'obturation d'entrée et/ou de sortie comprennent un volet d'obturation fixé sur une tige de vérin double effet, ladite tige étant apte à être déplacée entre une première position, dans laquelle le volet d'obturation obture le premier orifice d'entrée, respectivement de sortie, et une deuxième position, dans laquelle le volet d'obturation obture le deuxième orifice d'entrée, respectivement de sortie.

On obtient ainsi un ensemble compact, dont le nombre d'organes de commande est limité.

Par exemple, le premier compartiment d'entrée, respectivement de sortie, est situé en-dessous du deuxième compartiment d'entrée, respectivement de sortie, une zone d'un module étant intercalée entre les premier et deuxième compartiments, de sorte que ladite zone puisse être en communication avec les premier et deuxième compartiments via le premier et le deuxième orifices.

Les premier et deuxième compartiments d'entrée peuvent être décalés verticalement vers le bas et/ou transversalement par rapport aux premier et deuxième compartiments de sortie.

Selon un deuxième aspect, l'invention concerne une installation de traitement des gaz, comprenant au moins :
- un réacteur catalytique tel que précédemment décrit ;
- un conduit d'amenée des gaz à traiter, connecté au premier compartiment d'entrée, et un conduit d'évacuation des gaz traités, connecté au premier compartiment de sortie ;
- un conduit d'amenée des gaz de régénération, connecté à son extrémité aval au deuxième compartiment d'entrée, et un conduit d'évacuation des gaz issus de la régénération, connecté à son extrémité amont au deuxième compartiment de sortie ;
dans laquelle l'extrémité amont du conduit d'amenée des gaz de régénération est connectée au conduit d'amenée des gaz à traiter, en amont du réacteur catalytique, des moyens de chauffage des gaz étant intercalés entre l'extrémité amont et l'extrémité aval dudit conduit d'amenée des gaz de régénération.

Selon une réalisation possible, le conduit d'évacuation des gaz issus de la régénération est connecté à son extrémité aval au conduit d'amenée des gaz à traiter, en amont du réacteur catalytique.

L'installation peut comporter, en amont du réacteur catalytique, au moins un appareil de traitement apte à diminuer la teneur des gaz à traiter en au moins l'un des composés suivants : SO₂, HCl. NH₃ peut être recyclé dans les modules en fonctionnement pour effectuer la réaction de dénoxification.

Le conduit d'évacuation des gaz issus de la régénération peut être connecté à son extrémité aval au conduit d'amenée des gaz à traiter, en amont dudit appareil de traitement.

Enfin, selon un troisième aspect, l'invention concerne un procédé de régénération d'un module d'un réacteur catalytique tel que précédemment décrit, comprenant les étapes consistant à :
- positionner les moyens d'obturation d'entrée et de sortie dudit module à régénérer de sorte à obturer le premier orifice d'entrée et le premier orifice de sortie dudit module ;
- positionner les moyens d'obturation d'entrée et de sortie du ou des autres modules en phase de traitement, de sorte à obturer le deuxième orifice d'entrée et le deuxième orifice de sortie dudit ou desdits autres modules ;
- introduire une partie des gaz à traiter dans le premier compartiment d'entrée de sorte que lesdits gaz à traiter traversent les modules en phase de traitement, et évacuer les gaz traités dans lesdits modules depuis le premier compartiment de sortie ;
- chauffer l'autre partie des gaz à traiter de sorte à obtenir les gaz de régénération et introduire lesdits gaz de régénération dans le deuxième compartiment d'entrée de sorte que lesdits gaz de régénération traversent le module à régénérer, et évacuer les gaz issus de la régénération depuis le deuxième compartiment de sortie.

Le procédé peut en outre comprendre l'étape consistant à réintroduire les gaz issus de la régénération dans le premier compartiment d'entrée du réacteur catalytique. Par exemple, on peut faire passer les gaz issus de la régénération dans au moins un appareil de traitement apte à diminuer la teneur desdits gaz en au moins l'un des composés suivants : SO₂, HCl, avant de réintroduire lesdits gaz dans le premier compartiment d'entrée du réacteur catalytique, NH₃ étant alors recyclé dans les modules en traitement de dénoxification.

Les autres caractéristiques de l'invention résultent de la description qui suit de modes de réalisation, description effectuée en référence aux figures annexées
dans lesquelles :
- la figure 1 est une représentation schématique d'une installation de dénoxification de gaz selon l'invention, comprenant notamment un réacteur catalytique à 4 modules ;
- la figure 2 est une vue en élévation et partiellement en coupe verticale du réacteur catalytique de la figure 1 ;
- la figure 3 est une vue de dessus du réacteur catalytique de la figure 2 ;
- les figures 4 et 5 sont des vues en coupe d'un module du réacteur catalytique, selon la ligne AA de la figure 2, illustrant l'écoulement des gaz, respectivement en mode de traitement et en mode de régénération.
   Une installation 1 de dénoxification de gaz comprend un conduit 2 d'amenée des gaz à traiter 3, issus par exemple d'une installation d'incinération des ordures ménagères.

Les gaz à traiter 3 sont tout d'abord introduits dans différents appareils de traitement préalables, tels qu'un appareil 4 de traitement du HCl, SO₂ et un équipement de filtration 5 permettant un dépoussiérage des gaz 3.

Les gaz à traiter 3 sont ensuite acheminés vers une grille d'injection 6 d'ammoniaque 7, puis introduits, à l'extrémité aval du conduit 2, dans un premier compartiment d'entrée 8 d'un réacteur catalytique 9.

Une partie des gaz à traiter 3 peut être acheminée vers le réacteur 9 via un conduit 10, connecté à son extrémité amont au conduit 2 d'amenée des gaz à traiter 3, en amont du réacteur 9, et, à son extrémité aval, à un deuxième compartiment d'entrée 11 du réacteur 9.

Une vanne 12 permet de réguler la proportion de gaz à traiter 3 passant par le conduit 10. Un brûleur 13, alimenté en combustible exempt de soufre 14, est intercalé dans le conduit 10, de sorte à chauffer les gaz à traiter 3, de sorte à obtenir des gaz de régénération 15.

Le réacteur 9 possède un premier compartiment de sortie 16 depuis lequel sont évacués les gaz traités 17 via un conduit d'évacuation 18, et un deuxième compartiment de sortie 19 depuis lequel sont évacués les gaz issus de la régénération 20 via un conduit d'évacuation 21.

Le conduit d'évacuation 21 des gaz issus de la régénération 20 est connecté, à son extrémité aval, au conduit d'amenée 2, en amont de l'appareil 4.

Le conduit d'évacuation 18 des gaz traités 17 est connecté, à son extrémité aval, à un conduit de sortie 22 débouchant en partie inférieure d'une cheminée 23 par laquelle les gaz traités 17 sont rejetés à l'atmosphère. Une série d'analyseurs 24 permet le contrôle de la teneur des gaz rejetés en différents composés, parmi lesquels : HCl, SO₂, NOx, NH₃, H₂O, COT, CO.

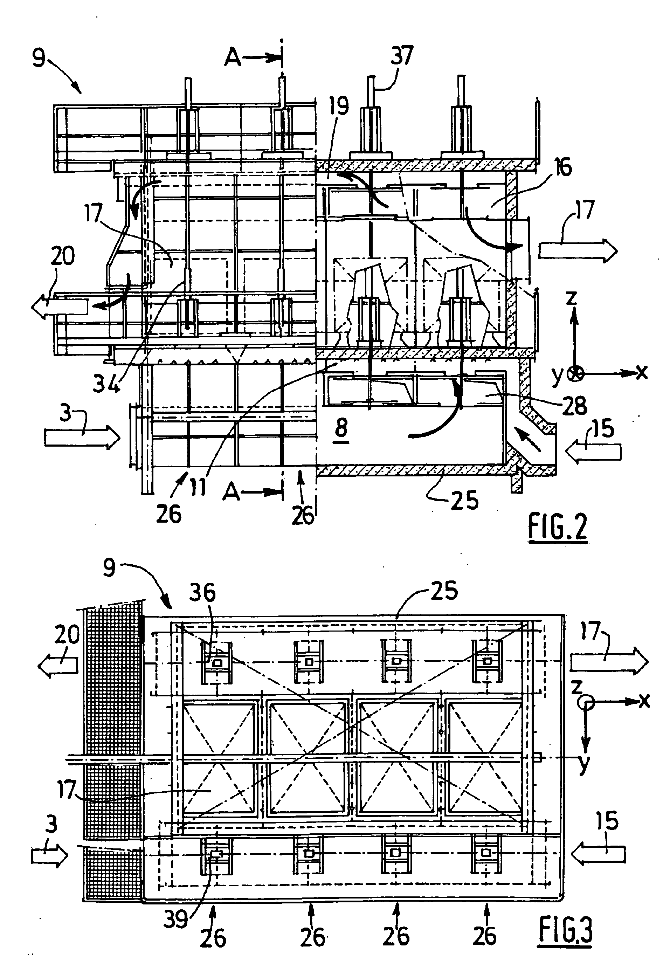

On décrit à présent plus précisément le réacteur catalytique 9 (figures 2 et 3).

Le réacteur 9 comporte une paroi latérale 25 définissant un volume intérieur comportant en partie inférieure les premier et deuxième compartiments d'entrée 8, 11 et en partie supérieure les premier et deuxième compartiments de sortie 16, 19.

Dans d'autres modes de réalisation non représentés, on peut toutefois prévoir que la paroi latérale 25 définisse un volume intérieur comportant en partie supérieure les premier et deuxième compartiments d'entrée 8, 11 et en partie inférieure les premier et deuxième compartiments de sortie 16, 19 de sorte à réaliser une circulation descendante des gaz.

Les compartiments 8, 11, 16, 19 sont globalement disposés selon une direction longitudinale x. On définit par ailleurs la direction verticale ascendante z et la direction transversale y telle que (x, y , z) forme un repère orthogonal.

Le premier compartiment d'entrée 8 est situé en-dessous du deuxième compartiment d'entrée 11 et écarté de celui-ci. De même, le premier compartiment de sortie 16 est situé en-dessous du deuxième compartiment de sortie 19 et écarté de celui-ci.

Les premier et deuxième compartiments d'entrée 8, 11 sont décalés transversalement et verticalement vers le bas par rapport aux premier et deuxième compartiments de sortie 16, 19.

Ainsi, en coupe verticale perpendiculairement à l'axe x, le volume intérieur défini par la paroi latérale 25 présente globalement une portion centrale de forme sensiblement rectangulaire, et deux portions latérales de forme sensiblement rectangulaires décalées verticalement et transversalement l'une par rapport à l'autre.

Le réacteur 9 est divisé, le long de l'axe x, en plusieurs modules 26 par exemple sensiblement identiques, ici 4 modules, aptes à fonctionner en parallèle.

Un module 26 contient en partie centrale un bloc catalyseur 27 se présentant par exemple sous la forme d'un produit catalyseur (tel qu'un oxyde de vanadium) en vrac ou fixé sur un garnissage.

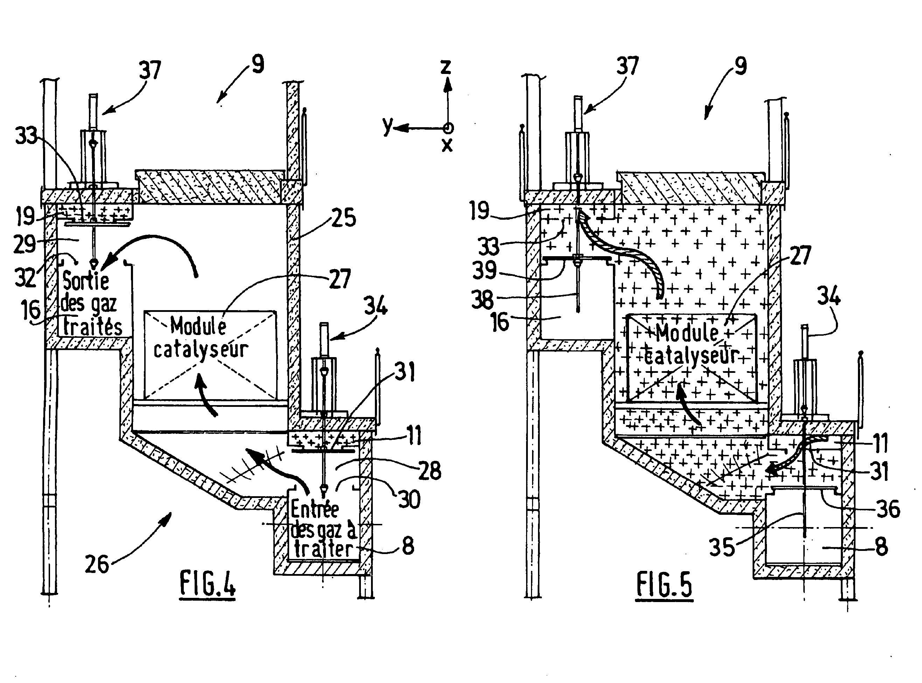

La figure 4 détaille les zones de circulation.

Le module 26 comprend également une zone d'entrée 28 intercalée entre les premier et deuxième compartiments d'entrée 8, 11 et une zone de sortie 29, intercalée entre les premier et deuxième compartiments de sortie 16, 19.

Le module 26 présente, dans la zone d'entrée 28, un premier orifice d'entrée 30 communiquant avec le premier compartiment d'entrée 8 et un deuxième orifice d'entrée 31 communiquant avec le deuxième compartiment d'entrée 11. Le module 26 présente, dans la zone de sortie 29, un premier orifice de sortie 32 communiquant avec le premier compartiment de sortie 16 et un deuxième orifice de sortie 33 communiquant avec le deuxième compartiment de sortie 19.

Un vérin double effet 34 comprenant une tige 35 verticale est placé au voisinage de la zone d'entrée 28, au-dessus du deuxième compartiment d'entrée 11. Sur la tige 35 est fixé un volet d'obturation 36 apte à être déplacé, par suite du coulissement de la tige 35, entre une première position, dans laquelle le volet 36 obture le premier orifice d'entrée 30 et une deuxième position, dans laquelle le volet 36 obture le deuxième orifice d'entrée 31.

De même, un vérin double effet 37 comprenant une tige 38 verticale est placé au voisinage de la zone de sortie 29, au-dessus du deuxième compartiment de sortie 19. Sur la tige 38 est fixé un volet d'obturation 39 apte à être déplacé, par suite du coulissement de la tige 38, entre une première position, dans laquelle le volet 39 obture le premier orifice de sortie 32 et une deuxième position, dans laquelle le volet 39 obture le deuxième orifice de sortie 33.

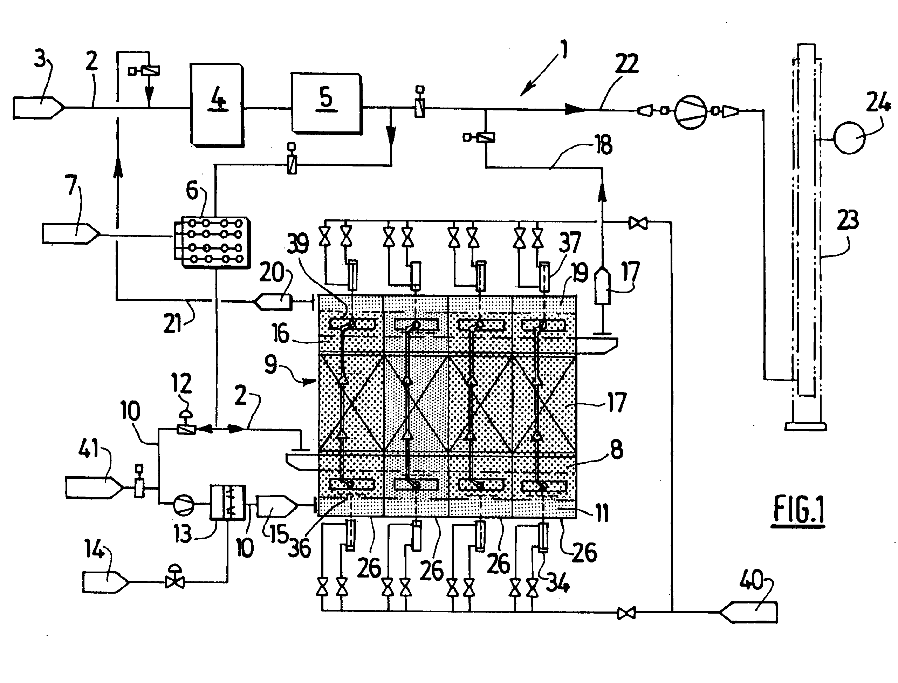

Les vérins 34, 37 sont actionnés par l'injection d'air comprimé 40 de façon sélective, grâce à un système de d'électro-vannes (voir figure 1).

Le réacteur 9 forme ainsi un ensemble compact et de conception relativement simple.

On décrit à présent le procédé de dénoxification des gaz à traiter 3 en référence à la figure 4.

Comme indiqué précédemment, les gaz 3 sont amenés dans le premier compartiment d'entrée 8 du réacteur 9. Les vérins 34 du ou des modules aptes à assurer la dénoxification sont dans la position telle que le deuxième orifice d'entrée 31 est obturé, tandis que les vérins 37 sont dans la position telle que le deuxième orifice de sortie 33 est obturé. Les gaz pénètrent alors dans le module 26, traversent le bloc catalyseur 27 puis pénètrent dans le premier compartiment de sortie 16 avant d'être évacués par le conduit 18. En fonctionnement normal, tous les modules fonctionnent ainsi en parallèle.

La dénoxification se fait en parallèle dans les 4 modules. La température des gaz à traiter 3, en entrée du réacteur 9, est comprise entre 165 et 240°C, de préférence entre 185 et 200°C environ. A cette température, il se forme des sels qui contaminent la surface du catalyseur et en diminue progressivement l'efficacité.

L'activité du catalyseur est régulièrement suivie, et l'augmentation de la teneur en NH₃ dans les gaz rejetés à la cheminée, au-delà d'un certain seuil, indique que le catalyseur n'est plus suffisamment performant.

Un ou plusieurs modules 26 sont alors « isolés » et ne fonctionnent plus en phase de traitement, mais en phase de régénération (figure 5).

La phase de régénération comprend en particulier une étape de déchloration/désulfuration.

Pour le module 26 concerné, le vérin 34 est dans la position telle que le premier orifice d'entrée 30 est obturé, tandis que le vérin 37 est dans la position telle que le premier orifice de sortie 32 est obturé.

Ledit module 26 est alimenté par les gaz de régénération 15, qui ne sont autres qu'une partie des gaz à traiter 3 qui ont été chauffés, à une température comprise entre 280 et 300°C. A cette température, il se produit une sublimation des sels déposés sur le catalyseur, qui sont évacués sous forme de gaz (notamment SO₂, HCl, NH₃) et donc la régénération du catalyseur. En effet, les gaz de régénération 15 pénètrent dans le module 26 par le deuxième compartiment d'entrée 11, traversent le bloc catalyseur 27 puis pénètrent dans le deuxième compartiment de sortie 19 avant d'être évacués par le conduit 21.

Simultanément, les gaz à traiter 3 pénètrent via les premiers compartiments d'entrée 8 et de sortie 16 dans les modules 26 en phase de dénoxification. Ainsi, par une simple commande des vérins 34, 37, la régénération d'un module n'entraîne pas l'arrêt de l'installation 1, et les gaz 3 peuvent toujours être traités en continu. On augmente ainsi la durée de vie du catalyseur sans perte de capacité de fonctionnement de l'installation.

Les produits sublimés sont évacués avec les gaz issus de la régénération 20, séparément des gaz traités 17. De ce fait, les produits sublimés ne sont pas rejetés à l'atmosphère mais sont réinjectés en entrée de l'installation 1 où ils pourront être traités comme les gaz 3. En fin de phase de régénération, de l'air ambiant 41 peut être injecté dans le deuxième compartiment d'entrée 11, afin de le purger et d'éviter ainsi les problèmes de corrosion.

## Revendications

1. Réacteur catalytique pour la dénoxification de gaz, comprenant :
- un premier compartiment d'entrée (8) dans lequel les gaz à traiter (3) sont destinés à être introduits ;
- un premier compartiment de sortie (16) depuis lequel les gaz traités (17) sont destinés à être évacués ;
- au moins deux modules (26), chaque module contenant un catalyseur apte à permettre la dénoxification des gaz à traiter (3) et présentant un premier orifice d'entrée (30) communiquant avec le premier compartiment d'entrée (8) du réacteur (9) et un premier orifice de sortie (32) communiquant avec le premier compartiment de sortie (16) du réacteur (9) ;
- un deuxième compartiment d'entrée (11) dans lequel des gaz de régénération (15) du catalyseur sont destinés à être introduits, chaque module (26) présentant un deuxième orifice d'entrée (31) communiquant avec ledit deuxième compartiment d'entrée (11) du réacteur (9) ;
- pour chaque module (26), des moyens d'obturation d'entrée (34) mobiles aptes à obturer sélectivement le premier ou le deuxième orifice d'entrée (30, 31) dudit module (26) ;
**caractérisé en ce qu'**il comprend en outre :
- un deuxième compartiment de sortie (19) depuis lequel les gaz issus de la régénération (20) du catalyseur sont destinés à être évacués, chaque module (26) présentant un deuxième orifice de sortie (33) communiquant avec ledit deuxième compartiment de sortie (19) du réacteur (9) ;
- pour chaque module (26), des moyens d'obturation de sortie (37) mobiles aptes à obturer sélectivement le premier ou le deuxième orifice de sortie (32, 33) dudit module, lesdits moyens d'obturation d'entrée et de sortie (34, 37) étant agencés pour que chaque module puisse, en fonction des besoins, être traversé soit par les gaz à traiter (3) soit par les gaz de régénération (15), indépendamment du ou des autres modules.

2. Réacteur selon la revendication 1, **caractérisé en ce que** les moyens d'obturation d'entrée et/ou de sortie comprennent un volet d'obturation (36, 39) fixé sur une tige (35, 38) de vérin double effet (34, 37), ladite tige (35, 38) étant apte à être déplacée entre une première position, dans laquelle le volet d'obturation (36, 39) obture le premier orifice d'entrée (30), respectivement de sortie (32), et une deuxième position, dans laquelle le volet d'obturation (36, 39) obture le deuxième orifice d'entrée (31), respectivement de sortie (33).

3. Réacteur selon la revendication 1 ou 2, **caractérisé en ce que** le premier compartiment d'entrée (8), respectivement de sortie (16), est situé en-dessous du deuxième compartiment d'entrée (11), respectivement de sortie (19), une zone (28, 29) d'un module (26) étant intercalée entre les premier et deuxième compartiments, de sorte que ladite zone (28, 29) puisse être en communication avec les premier et deuxième compartiments via le premier et le deuxième orifices (30, 31, 32, 33).

4. Réacteur selon l'une quelconque des revendications 1 à 3, **caractérisé en ce que** les premier et deuxième compartiments d'entrée (8, 11) sont décalés verticalement vers le bas par rapport aux premier et deuxième compartiments de sortie (16, 19).

5. Réacteur selon l'une quelconque des revendications 1 à 4, **caractérisé en ce que** les premier et deuxième compartiments d'entrée (8, 11) sont décalés transversalement par rapport aux premier et deuxième compartiments de sortie (16, 19).

6. Installation de traitement des gaz, comprenant au moins :
- un réacteur catalytique (9) selon l'une quelconque des revendications 1 à 5;
- un conduit d'amenée (2) des gaz à traiter (3), connecté au premier compartiment d'entrée (8), et un conduit d'évacuation (18) des gaz traités (17), connecté au premier compartiment de sortie (16) ;
- un conduit d'amenée (10) des gaz de régénération (15), connecté à son extrémité aval au deuxième compartiment d'entrée (11), et un conduit d'évacuation (21) des gaz issus de la régénération (20), connecté à son extrémité amont au deuxième compartiment de sortie (19) ;
**caractérisée en ce que** l'extrémité amont du conduit d'amenée (10) des gaz de régénération (15) est connectée au conduit d'amenée (2) des gaz à traiter (3), en amont du réacteur catalytique (9), des moyens de chauffage (13) des gaz étant intercalés entre l'extrémité amont et l'extrémité aval dudit conduit d'amenée (10) des gaz de régénération (15).

7. Installation selon la revendication 6, **caractérisée en ce que** le conduit d'évacuation (18) des gaz issus de la régénération (20) est connecté à son extrémité aval au conduit d'amenée (2) des gaz à traiter (3), en amont du réacteur catalytique (9).

8. Installation selon la revendication 6 ou 7, **caractérisée en ce qu'**elle comprend, en amont du réacteur catalytique (9), au moins un appareil de traitement (4, 5) apte à diminuer la teneur des gaz à traiter (3) en au moins l'un des composés suivants : SO₂, HCl.

9. Installation selon les revendications 7 et 8, **caractérisée en ce que** le conduit d'évacuation (21) des gaz issus de la régénération (20) est connecté à son extrémité aval au conduit d'amenée (2) des gaz à traiter (3), en amont dudit appareil de traitement (4, 5).

10. Procédé de régénération d'un module (26) d'un réacteur catalytique (9) selon l'une quelconque des revendications 1 à 5, **caractérisé en ce qu'**il comprend les étapes consistant à :
- positionner les moyens d'obturation d'entrée (34) et de sortie (37) dudit module (26) à régénérer de sorte à obturer le premier orifice d'entrée (30) et le premier orifice de sortie (32) dudit module (26) ;
- positionner les moyens d'obturation d'entrée (34) et de sortie (37) du ou des autres modules (26) en phase de traitement, de sorte à obturer le deuxième orifice d'entrée (31) et le deuxième orifice de sortie (33) dudit ou desdits autres modules (26) ;
- introduire une partie des gaz à traiter (3) dans le premier compartiment d'entrée (8) de sorte que lesdits gaz à traiter (3) traversent les modules (26) en phase de traitement, et évacuer les gaz traités (17) dans lesdits modules (26) depuis le premier compartiment de sortie (16) ;
- chauffer l'autre partie des gaz à traiter (3) de sorte à obtenir les gaz de régénération (15) et introduire lesdits gaz de régénération (15) dans le deuxième compartiment d'entrée (11) de sorte que lesdits gaz de régénération (15) traversent le module (26) à régénérer, et évacuer les gaz issus de la régénération (20) depuis le deuxième compartiment de sortie (19).

11. Procédé de régénération selon la revendication 10, **caractérisé en ce qu'**il comprend en outre l'étape consistant à réintroduire les gaz issus de la régénération (20) dans le premier compartiment d'entrée (8) du réacteur catalytique (9).

12. Procédé de régénération selon la revendication 11, **caractérisé en ce qu'**il comprend en outre l'étape consistant à faire passer les gaz issus de la régénération (20) dans au moins un appareil de traitement (4, 5) apte à diminuer la teneur desdits gaz (20) en au moins l'un des composés suivants : SO₂, HCl, avant de réintroduire lesdits gaz (20) dans le premier compartiment d'entrée (8) du réacteur catalytique (9).

## Claims

1. Catalytic reactor for the denoxification of gas, comprising:
- A first entrance compartment (8) in which the gases to be treated (3) are intended to be introduced;
- A first exit compartment (16) from which the treated gases (16) are intended to be evacuated;
- At least two modules (26), each module containing a catalyst suitable for enabling the denoxification of the gases to be treated (3) and with a first entry orifice (30) communicating with the first entrance compartment (8) of the reactor (9) and a first exit orifice (32) communicating with the first exit compartment (16) of the reactor (9);
- A second entrance compartment (11) in which the catalyst regeneration gases (15) are intended to be introduced, each module (26) having a second entry orifice (31) communicating with said second entrance compartment (11) of the reactor (9);
- For each module (26), mobile means (34) of obstructing entrance, suitable for selectively obstructing the first or second entry orifice (30, 31) of said module (26);
**characterised in that** it also comprises:
- A second exit compartment (19) from which the gases resulting from the regeneration (20) of the catalyst are intended to be evacuated, each module (26) having a second exit orifice (33) communicating with said second exit compartment (19) of the reactor (9);
- For each module (26), mobile means for obstructing the exit (37) suitable for selectively obstructing the first or second exit orifice (32, 33) of said module, said means of obstructing entry and exit (34, 37) being constructed such that each module may, according to its needs, have either the gases to be treated (3) or the regeneration gases (15) passing through it, independently of the other module(s).

2. Reactor according to claim 1, **characterised in that** the means for obstructing the entry and/or exit comprise a shutter (36, 39) fixed on a shaft (35, 38) with double acting cylinder (34, 37), said shaft (35, 38) being suitable for being moved between a first position, in which the shutter (36, 39) obstructs the first entry (30) or exit orifice (32), respectively, and a second position, in which the shutter (36, 39) obstructs the second entry (31) or exit (33) orifice, respectively.

3. Reactor according to claim 1 or 2, **characterised in that** the first entry (8) and exit (16) compartment, respectively, is situated below the second entry (11) or exit (19) compartment, respectively, a zone (28, 29) of a module (26) being placed in between the first and second compartments, such that said zone (28, 29) may be in communication with the first and second compartments via the first and second orifices (30, 31, 32, 33).

4. Reactor according to any one of claims 1 to 3, **characterised in that** the first and second entrance compartments (8, 11) are offset vertically downwards relative to the first and second exit compartments (16, 19).

5. Reactor according to any one of claims 1 to 4, **characterised in that** the first and second entrance compartments (8, 11) are offset transversally relative to the first and second exit compartments (16, 19).

6. Gas treatment installation, comprising at least:
- A catalytic reactor (9) according to any one of claims 1 to 5;
- A delivery pipe (2) for the gases to be treated (3), connected to the first entrance compartment (8), and an evacuation pipe (18) for the treated gases (17), connected to the first exit compartment (16);
- A delivery pipe (10) for the regeneration gases (15), the downstream end of which is connected to the second entrance compartment (11), and an evacuation pipe (21) for the gases produced by the regeneration (20), the upstream end of which is connected to the second exit compartment (19);
**characterised in that** the upstream end of the delivery pipe (10) for the regeneration gases (15) is connected to the delivery pipe (2) of the gases to be treated (3), upstream of the catalytic reactor (9), means (13) for heating the gases being placed between the upstream end and the downstream end of said delivery pipe (10) for the regeneration gases (15).

7. Installation according to claim 6, **characterised in that** the downstream end of the evacuation pipe (18) for the gases produced by the regeneration (20) is connected to the delivery conduit (2) for the gases to be treated (3), upstream of the catalytic reactor (9).

8. Installation according to claim 6 or 7, **characterised in that** it comprises, upstream of the catalytic reactor (9), at least one treatment device (4, 5) suitable for reducing the content of at least one of the following compounds in the gases to be treated (3): SO₂, HCl.

9. Installation according to claims 7 and 8, **characterised in that** the downstream end of the evacuation pipe (21) for the gases produced by the regeneration (20) is connected to the delivery pipe (2) for the gases to be treated (3), upstream of said treatment device (4, 5).

10. Regeneration process for a module (26) of a catalytic reactor (9), according to any one of claims 1 to 5, **characterised in that** it comprises the steps consisting of:
- Positioning the means for obstructing the entrance (34) and exit (37) of said module (26) to be regenerated, such that the first entry orifice (30) and the first exit orifice (32) of said module (26) are obstructed;
- Positioning the means for obstructing the entrance (34) and exit (37) of the other module(s) (26) in treatment phase, such that the second entry orifice (31) and the second exit orifice (33) of said other module(s) (26) are obstructed;
- Introducing part of the gases to be treated (3) into the first entrance compartment (8) such that said gases to be treated (3) pass through the modules (26) in treatment phase, and evacuating the treated gases (17) from said modules (26) via the first exit compartment (16);
- Heating the other part of the gases to be treated (3) such that the regeneration gases (15) are obtained, and introducing said regeneration gases (15) into the second entrance compartment (11) such that said regeneration gases (15) pass through the module (26) to be regenerated, and evacuating the gases produced by the regeneration (20) from the second exit compartment (19).

11. Regeneration process according to claim 10, **characterised in that** it also comprises the step consisting of reintroducing the gases produced by the regeneration (20) into the first entrance compartment (8) of the catalytic reactor (9).

12. Regeneration process according to claim 11, **characterised in that** it also comprises the step consisting of passing the gases produced by the regeneration (20) into at least one treatment device (4, 5) suitable for lowering the content of at least one of the following compounds in said gases (20): SO₂, HCl, before reintroducing said gases (20) into the first entrance compartment (8) of the catalytic reactor (9).

## Patentansprüche

1. Katalytischer Reaktor für die Entfernung von Stickstoffoxiden aus Gas, mit:
- einem ersten Eingangsraum (8), in den zu behandelnde Gase (3) eingeleitet werden sollen;
- einem ersten Ausgangsraum (16), von welchem aus die behandelten Gase (17) evakuiert werden sollen;
- wenigstens zwei Modulen (26), wobei jedes Modul einen Katalysator enthält, der so ausgebildet ist, dass dieser die Entfernung von Stickstoffoxiden aus den zu behandelnden Gasen (3) ermöglicht, und aufweist eine erste Eingangsöffnung (30), die mit dem ersten Eingangsraum (8) des Reaktors (9) kommuniziert, und eine erste Ausgangsöffnung (32), die mit dem ersten Ausgangsraum (16) des Reaktors (9) kommuniziert;
- einem zweiten Eingangsraum (11), in welchen Regenerationsgase (15) des Katalysators eingeleitet werden sollen, wobei jedes Modul (26) eine zweite Eingangsöffnung (31) aufweist, die mit dem zweiten Eingangsraum (11) des Reaktors (9) kommuniziert;
- für jedes Modul (26) beweglichen Eingangs-Verschlussmitteln (34), die so ausgebildet sind, dass diese wahlweise die erste oder zweite Eingangsöffnung (30, 31) des Moduls (26) verschließen;
**dadurch gekennzeichnet, dass** dieser ferner umfasst:
- einen zweiten Ausgangsraum (19), von welchem aus die aus der Regeneration (20) stammenden Gase des Katalysators evakuiert werden sollen, wobei jedes Modul (26) eine zweite Ausgangsöffnung (23) aufweist, die mit dem zweiten Ausgangsraum (19) des Reaktors (9) kommuniziert;
- für jedes Modul (26) bewegliche Ausgangs-Verschlussmittel (37), die so ausgebildet sind, dass diese wahlweise die erste oder zweite Ausgangsöffnung (32, 33) des Moduls verschließen, wobei die Eingangs- und Ausgangs-Verschlussmittel (34, 37) so angeordnet sind, dass jedes Modul je nach Bedarf unabhängig von dem Modul oder den weiteren Modulen entweder von den zu behandelnden Gasen (3) oder von den Regenerationsgasen (15) durchströmt wird.

2. Reaktor nach Anspruch 1, **dadurch gekennzeichnet, dass** die Eingangs- und/oder Ausgangs-Verschlussmittel eine Verschlussklappe (36, 39) umfassen, die auf einer Stange (35, 38) eines Doppeleffektzylinders (34, 37) befestigt sind, wobei die Stange (35, 38) so ausgebildet ist, dass diese verschiebbar ist zwischen einer ersten Position, in welcher die Verschlussklappe (36, 39) die erste Eingangs (30) - bzw. Ausgangs (32) -Öffnung schließt, und einer zweiten Position, in welcher die Verschlussklappe (36, 39) die erste Eingangs (31) - bzw. Ausgangs (33) -Öffnung schließt.

3. Reaktor nach Anspruch 1 oder 2, **dadurch gekennzeichnet, dass** der erste Eingangs (8) - bzw. Ausgangs (16) -Raum unterhalb des zweiten Eingangs (11) - bzw. Ausgangs (19) -Raums liegt, wobei eine Zone (28, 29) eines Moduls (26) zwischen dem ersten und zweiten Raum angeordnet ist, derart, dass diese Zone (28, 29) mit dem ersten und zweiten Raum über die erste und zweite Öffnung (30, 31, 32, 33) in Kommunikation stehen kann.

4. Reaktor nach einem der Ansprüche 1 bis 3, **dadurch gekennzeichnet, dass** der erste und der zweite Eingangsraum (8, 11) in Bezug zu dem ersten und dem zweiten Ausgangsraum (16, 19) vertikal nach unten versetzt sind.

5. Reaktor nach einem der Ansprüche 1 bis 4, **dadurch gekennzeichnet, dass** der erste und der zweite Eingangsraum (8, 11) in Bezug zu dem ersten und dem zweiten Ausgangsraum (16, 19) in Querrichtung versetzt sind.

6. Anlage zur Behandlung von Gas, mit wenigstens:
- einem katalytischen Reaktor (9) nach einem der Ansprüche 1 bis 5;
- einer Versorgungsleitung (2) für zu behandelnde Gase (3), die mit dem ersten Eingangsraum (8) verbunden ist, und einer Evakuierungsleitung (18) für behandelte Gase (17), die mit dem ersten Ausgangsraum (16) verbunden ist;
- einer Versorgungsleitung (10) für Regenerationsgase (15), die mit ihrem stromabwärts liegenden Ende mit dem zweiten Eingangsraum (11) verbunden ist, und einer Evakuierungsleitung (21) für aus der Regeneration (20) gelieferte Gase, die mit ihrem stromaufwärts liegenden Ende mit dem zweiten Ausgangsraum (19) verbunden ist;
**dadurch gekennzeichnet, dass** das stromaufwärts liegende Ende der Versorgungsleitung (10) für Regenerationsgase (15) mit der Versorgungsleitung (2) für zu behandelnde Gase (3) stromaufwärts des katalytischen Reaktors ('9) verbunden ist, wobei eine Heizeinrichtung (13) für die Gase zwischen dem stromaufwärts liegenden Ende und dem stromabwärts liegenden Ende der Versorgungsleitung (10) der Regenerationsgase (15) angeordnet ist.

7. Anlage nach Anspruch 6, **dadurch gekennzeichnet, dass** die Evakuierungsleitung (18) der aus der Regeneration (20) gelieferten Gase mit ihrem stromabwärts liegenden Ende mit der Versorgungsleitung (2) der zu behandelnden Gase (3) stromaufwärts des katalytischen Reaktors (9) verbunden ist.

8. Anlage nach Anspruch 6 oder 7, **dadurch gekennzeichnet, dass** diese stromaufwärts des katalytischen Reaktors (9) wenigstens eine Behandlungsvorrichtung (4, 5) umfasst, die so ausgebildet ist, dass diese den Gehalt der zu behandelnden Gase (3) für wenigstens einen der folgenden Bestandteile vermindert: SO₂, HCl.

9. Anlage nach den Ansprüchen 7 und 8, **dadurch gekennzeichnet, dass** die Evakuierungsleitung (21) der aus der Regeneration (20) gelieferten Gase mit ihrem stromabwärts liegenden Ende mit der Versorgungsleitung (2) der zu behandelnden Gase (3) stromaufwärts der Behandlungsvorrichtung (4, 5) verbunden ist.

10. Verfahren zur Regeneration eines Moduls (26) eines katalytischen Reaktors (9) nach einem der Ansprüche 1 bis 5, **dadurch gekennzeichnet, dass** dieses die Schritte umfasst, bestehend aus:
- Positionieren der Eingangs (34) - und Ausgangs (37) -Verschlussmittel des zu regenerierenden Moduls (26) derart, dass die erste Eingangsöffnung (30) und die erste Ausgangsöffnung (32) des Moduls (26) verschlossen sind;
- Positionieren der Eingangs (34) - und Ausgangs (37) - Verschlussmittel des oder der weiteren Moduls/Module (26) in Behandlungsphase, derart, dass die zweite Eingangsöffnung (31) und die zweite Ausgangsöffnung (33) des oder der weiteren Moduls/Module (26) verschlossen sind;
- Einleiten eines Teils des zu behandelnden Gases (3) in den ersten Eingangsraum (8), derart, dass die zu behandelnden Gase (3) die Module (26) in Behandlungsphase durchströmen, und Evakuieren der behandelten Gase (17) in den Modulen (26) von dem ersten Ausgangsraum (16) aus;
- Erwärmen des weiteren Teils der zu behandelnden Gase (3), um so die Regenerationsgase (15) zu erhalten, und Einleiten dieser Regenerationsgase (15) in den zweiten Eingangsraum (11), derart, dass die Regenerationsgase (15) das zu regenerierende Modul (26) durchströmen, und Evakuieren der aus der Regeneration (20) gelieferten Gase von dem zweiten Ausgangsraum (19) aus.

11. Verfahren zur Regeneration nach Anspruch 10, **dadurch gekennzeichnet, dass** dieses ferner den Schritt umfasst, bestehend darin, dass die aus der Regeneration (20) gelieferten Gase wieder in den ersten Eingangsraum (8) des katalytischen Reaktors (9) eingeleitet werden.

12. Verfahren zur Regeneration nach Anspruch 11, **dadurch gekennzeichnet, dass** dieses ferner den Schritt umfasst, bestehend darin, die aus der Regeneration (20) gelieferten Gase in wenigstens eine Behandlungsvorrichtung (4, 5) passieren zu lassen, die so ausgebildet ist, dass der Gehalt der Gase (20) an wenigstens einem der folgenden Bestandteile vermindert wird: SO₂, HCl, bevor die Gase (20) wieder in den ersten Eingangsraum (8) des katalytischen Reaktors (9) eingeleitet werden.
